# EUROPÄISCHE PATENTANMELDUNG

(11) **EP 1 046 887 A1**
(43) Veröffentlichungstag der Anmeldung: **25.10.2000**
(21) Anmeldenummer: 99107768.6
(22) Anmeldetag: 19.04.1999
(51) Int. Cl.: G01F 1/684, G01F 5/00, F15D 1/02

(54) **Vorrichtung zum Messen eines Fluidmassendurchflusses**

(71) Anmelder: Gamperl Gastechnik, 85414 Kirchdorf (DE)
(72) Erfinder: Gamperl, Leonhard, 85414 Kirchdorf (DE)
(74) Vertreter: Winter, Brandl & Partner

(57) **Zusammenfassung**

Offenbart ist eine Vorrichtung zum Messen eines Fluidmassendurchflusses, insbesondere Gasmassendurchflusses, mit einem Fluideingangskanal; einem Fluidausgangskanal; einem Sensorkanal mit einem Sensor zum Erfassen des Fluidmassendurchflusses eines ersten Fluidteilstroms, wobei der Sensorkanal zwischen dem Fluideingangskanal und dem Fluidausgangskanal angeordnet ist; und einem Bypaßkanal mit einem Bypaß 50 zum Einstellen der Größe eines zweiten Teilstroms, wobei der Bypaßkanal parallel zum Sensorkanal zwischen dem Fluideingangskanal und dem Fluidausgangskanal angeordnet ist. Der Bypaß 50 umfaßt dabei einen Fluideingang 58, einen Fluidausgang 59, einen Fluideinstellraum 54, der zwischen dem Fluideingang 58 und dem Fluidausgang 59 ausgebildet ist, ein eine laminare Strömung bereitstellendes Einstellmedium 70, das in dem Fluideinstellraum 54 angeordnet ist, wobei das Einstellmedium 70,80 eine Agglomeration einer Vielzahl einzelner Elemente ist, durch deren Zwischenräume das Fluid strömt. Derartige Bypässe erlauben aufgrund der Bereitstellung einer laminaren Strömung durch das Einstellmedium eine hoch präzise Bestimmung des Fluidmassendurchflusses.

## Beschreibung

### Technisches Gebiet

Die Erfindung betrifft einen Bypaß für eine Vorrichtung zum Messen eines Fluidmassendurchflusses nach Anspruch 1, sowie eine Vorrichtung zum Messen eines Fluidmassendurchflusses nach Anspruch 11.

Derartige Vorrichtungen zum Messen eines Fluidmassendurchflusses haben einen breiten Anwendungsbereich. Sie eignen sich aufgrund ihrer hoch präzisen Messung des Fluidmassendurchflusses, insbesondere eines Gasmassendurchflusses, beispielsweise für den Einsatz in der Halbleiterherstellung, Glasherstellung, Umwelttechnik, Lebensmitteltechnik, Lasertechnik, aber auch für den Einsatz in der Automobilindustrie.

### Stand der Technik

Aus der Deutschen Offenlegungsschrift mit der Nummer DE 3723256 A1 ist eine Vorrichtung zum Messen und Regeln eines Gasmassenflusses bekannt, die aufweist einen Gaseingangskanal, einen Gasausgangskanal, einen Sensorkanal mit einem Sensor zum Erfassen des Gasmassendurchflusses eines ersten Gasteilstroms, wobei der Sensorkanal zwischen dem Gaseingangskanal und dem Gasausgangskanal angeordnet ist, und einen Bypaßkanal mit einer Bypaßeinrichtung zum Einstellen der Größe eines zweiten Gasteilstroms, wobei der Bypaßkanal parallel zum Sensorkanal zwischen dem Gaseingangskanal und dem Gasausgangskanal angeordnet ist. Dabei weist die Bypaßeinrichtung eine zylinderförmige Bypaßsackbohrung mit Gleitsitz auf, in die ein Bypaßzylinder einführbar ist. Der Gleitsitz ist derart ausgebildet, daß der erste Teilstrom (Hauptstrom) des Gases laminar über die Mantelfläche des Bypaßzylinders fließt, wobei der zweite Teilstrom über eine Eingangsmündung des Sensorkanals abzweigt, durch den Sensorkanal läuft, und durch die Ausgangsmündung des Sensorkanals wieder zum Hauptstrom stößt. Zwischen den beiden Kannälen, dem Sensorkanal und dem Bypaßkanal, und dem Gasausgangskanal ist ein Kanal für ein Regelventil zum Begrenzen des Gasstroms durch die Vorrichtung zum Messen und Regeln eines Gasmassenflusses vorgesehen.

Als nachteilig bei der oben beschriebenen Vorrichtung stellt sich heraus, daß die Laminarität des Bypaßstroms bzw. Bypaßdurchflusses nur schwer zu erreichen ist, was jedoch für eine präzise Bestimmung des Gasmassendurchflusses notwendig ist. Des weiteren stellt sich als nachteilig heraus, daß zum Einstellen eines bestimmten Meßbereichs der Vorrichtung, d.h. bei der Eichung der Vorrichtung, der durch die Bypaßeinrichtung fließende Massendurchfluß jedesmal durch Auswechseln bzw. Einsetzen eines bestimmten Bypaßzylinders derart variiert werden muß, um eine bestimmte für den Sensor optimale Durchflußmenge in den Sensorkanal zu leiten. Eine vorgeschlagene unrunde Ausbildung des Bypaßzylinders, um eine bestimmte Regelung des zweiten Teilstroms (Bypaßstrom) mit einem Bypaßzylinder zu erreichen, läßt neben seiner technisch komplizierten Realisierung nur einen sehr kleinen Regelungsbereich der Durchflußmenge zu, damit die Laminarität im Bypaßstrom erhalten bleibt. Somit bleibt bei der Eichung weiter ein Auswechseln der Bypaßzylinder notwendig, was zeitaufwendig ist und eine erhebliche Lagerhaltung von Bypaßzylindern erfordert.

### Darstellung der Erfindung

Es ist daher die Aufgabe der vorliegenden Erfindung, eine Vorrichtung zum Messen eines Fluidmassendurchflusses zu schaffen, mit der eine zum Stand der Technik verbesserte Laminarität des Bypaßdurchflusses möglich ist.

Diese Aufgabe wird durch einen Bypaß für eine Vorrichtung zum Messen eines Fluidmassendurchflusses nach Anspruch 1, sowie eine Vorrichtung zum Messen eines Fluidmassendurchflusses nach Anspruch 11 gelöst. Vorteilhafte Ausgestaltungen des Bypasses bzw. der Vorrichtung zum Messen eines Fluidmassendurchflusses sind Gegenstand der Unteransprüche.

Eine Vorrichtung zum Messen eines Fluidmassendurchflusses beinhaltet dabei einen Fluideingangskanal; einen Fluidausgangskanal; einen Sensorkanal mit einem Sensor zum Erfassen des Fluidmassendurchflusses eines ersten Fluidteilstroms, wobei der Sensorkanal zwischen dem Fluideingangskanal und dem Fluidausgangskanal angeordnet ist; und einen einem Bypaßkanal mit einem Bypaß zum Einstellen der Größe eines zweiten Fluidteilstroms, wobei der Bypaßkanal parallel zum Sensorkanal zwischen dem Fluideingangskanal und dem Fluidausgangskanal angeordnet ist. Erfindungsgemäß umfaßt dabei der Bypaß einen Fluideingang; einen Fluidausgang; einen Fluideinstellraum, der zwischen dem Fluideingang und dem Fluidausgang ausgebildet ist; ein eine laminare Strömung bereitstellendes Einstellmedium, das in dem Fluideinstellraum angeordnet ist, daß das Einstellmedium eine Agglomeration einer Vielzahl einzelner Elemente ist, wobei das Fluid durch Zwischenräume von benachbarten Elementen strömt.

Gemäß einer vorteilhaften Ausgestaltung des Bypasses ist der Strömungswiderstand für das durch den Bypaß strömende Fluid durch Veränderung der geometrischen Form des Einstellmediums einstellbar.

Gemäß einer weiteren vorteilhaften Ausgestaltung des Bypasses ist ferner eine Einstelleinrichtung zur Veränderung der geometrischen Form des Einstellmediums vorgesehen. Diese kann beispielsweise ein von der Außenseite des Bypasses in den Einstellraum sich erstreckendes Verstellglied aufweisen, das von der Außenseite des Bypasses manuell oder mittels einer elektrisch betriebenen Einrichtung, wie beispielsweise einem Elektromotor, betätigt wird. Es ist ferner denkbar, daß die Einstelleinrichtung eine elektrisch betriebene Einrichtung, wie beispielsweise einen Elektromotor oder einen Piezoaktor aufweist, die im Einstellraum angeordnet ist und ein im Einstellraum bewegbares und dort angeordnetes Verstellglied betätigt.

Zur Veränderung der Form des Einstellmediums auf eine derartige Weise, daß ein Vergrößern bzw. Verkleinern des Strömungswiderstands des Bypasses erreicht wird (eine derartige Veränderung kann auch im wesentlichen reversibel erfolgen), ist es vorteilhaft, wenn die Einstelleinrichtung eine Stange aufweist, die sich eintretend an einer der Seiten des Fluideingangs oder Fluidausgangs in Richtung der anderen der Seiten des Fluideingangs oder Fluidausgangs erstreckt und in Richtung seiner Achse bewegbar ist. Hierbei kann der Einstellraum beispielsweise als Zylinder ausgebildet sein, deren jeweilige Grundflächen den Fluideingang bzw. Fluidausgang darstellen. Die Stange, sofern sie als gerade angenommen wird, erstreckt sich dann entlang der Zylinderachse. Zur besseren Lagerung der Stange kann diese auch durch eine Grundfläche in den Einstellraum eintreten und aus diesem durch die andere Grundfläche wieder austreten.

Zur besseren Wechselwirkung mit dem Einstellmedium bzw. zum leichteren Durchführen einer Veränderung dessen Form weist der in dem Einstellraum angeordnete Abschnitt der Stange an seinem Endabschnitt eine Preßplatte auf, die derart angeordnet ist, daß sie sich radial von der Stangenachse weg erstreckt. Im Falle eines zylindrischen Einstellraums ist es vorteilhaft, eine kreisförmige Scheibe zu verwenden, die an einer zentralen Ausnehmung bzw. einem zentralen Loch mit der Stange befestigt ist. Da es möglich ist, die Preßplatte derart zu dimensionieren, daß der Randabschnitt an der bzw. den Seitenflächen des Einstellraums anliegt, ist es ferner vorteilhaft, die Preßplatte mit Durchgangslöchern zu versehen, um unabhängig von der Preßplattenabmessung einen angemessenen Fluiddurchfluß sicherzustellen.

Gemäß einer weiteren vorteilhaften Ausgestaltung des Bypasses kann das Einstellmedium nun zwischen der Seite des Fluideingangs oder Fluidausgangs, d.h. der Seite, an der die Stange eintritt, und der Preßplatte angeordnet sein. Es ist jedoch auch möglich, das Einstellmedium zwischen der anderen der Seite des Fluideingangs oder Fluidausgangs, d.h. der Seite, an der die Stange nicht in den Einstellraum eintritt, und der Preßplatte anzuordnen.

Gemäß einer weiteren vorteilhaften Ausgestaltung des Bypasses weist das Einstellmedium einen fasrigen Stoff, wie beispielsweise Stahlwolle bzw. Edelstahlwolle auf. Es ist auch denkbar Plastikwolle zu verwenden. Der fasrige Stoff ist dabei als eine Agglomeration bzw. als lockere Anhäufung von Fasern derart angeordnet, daß bei deren Veränderung ihrer geometrischen Form aufgrund einer Bewegung der Stange eine bestimmte Dichte von ihr und somit des Strömungswiderstands einstellbar ist. Bezüglich der Edelstahlwolle kann dabei feine (30g), mittelfeine (40g) oder grobe (50g) Edelstahlwolle verwendet werden. Des weiteren ist es denkbar als Einstellmedium eine Vielzahl von unabhängig voneinander bewegbaren gerundeten Körpern, vorzugsweise Kügelchen oder Ellipsoiden, zu verwenden, deren Durchmesser bzw. Abmessungen klein relativ zu der Abmessung des Einstellraums ist. Die Körper bzw. Kügelchen können dabei beispielsweise aus einem Metall wie Edelstahl oder auch aus Kunststoff gefertigt sein und können alle den gleichen Durchmesser aufweisen. Durch ein Aneinanderpressen bzw. Zusammenpressen der Kügelchen, beispielsweise durch die oben genannte Preßplatte, zu einer dichten Kugelpackung, wird somit ein großer Strömungswiderstand eingestellt, der durch Wegnahme des Anpreßdrucks, wobei sich die Kugeln entweder aufgrund der Schwerkraft oder einer elastischen Deformation wieder auseinander bewegen, wieder verringert werden kann. Zum Festmachen bzw. Fixieren der Kügelchen ist es in dem Falle, daß diese zumindest teilweise ferromagnetische Anteile aufweisen, auch möglich, einen Magneten vorzusehen, der innerhalb des Bypasses, beispielsweise in der oben erwähnten Stange, oder auch außerhalb in der Nähe des Bypasses angeordnet wird.

Gemäß einer vorteilhaften Ausgestaltung des Einstellmediums kann dies eine Kombination des fasrigen Stoffes und der gerundeten Körper aufweisen, wobei diese insbesondere eine zusammengesetzte Struktur aus entlang der Stange angeordneten Abschnitten aufweist, bei der zumindest ein Abschnitt aus der Edelstahlwolle und zumindest ein Abschnitt aus der Vielzahl von unabhängig voneinander bewegbaren Körpern bzw. Kügelchen besteht.

Sowohl die Wolle als auch die gerundeten Körper haben die Eigenschaft, daß sie für das durch den Bypaß strömende Fluid einen langen zu durchströmenden Weg bereitstellen, durch den eine im wesentlichen laminare Strömung im Bypaß gewährleistet wird. Diese Eigenschaft ist für eine Messung mit hoher Präzision erforderlich.

Wird die Vorrichtung zum Messen eines Fluidmassendurchflusses ferner zur Regelung des durch die Vorrichtung hindurch tretenden Massendurchflusses verwendet, so kann gemäß einer vorteilhaften Ausgestaltung der Erfindung ein Steuerventil in dem Fluideingangskanal bzw. Fluidausgangskanal vorgesehen sein. Vor allem bei einer manuellen Regelung ist es dann vorteilhaft, ferner eine Anzeigeeinrichtung zum Anzeigen eines von dem Sensor ausgegebenen Sensorsignals, beispielsweise eines Spannungswerts, vorzusehen, mit dessen Hilfe es ermöglicht wird, das Steuerventil, beispielsweise in der Form eines handbetriebenes Ventil bzw. Handventil oder elektrisch betriebenen Ventils, derart zu steuern, daß ein Sollmassendurchflußwert durch die Vorrichtung einstellbar ist.

Gemäß einer weiteren vorteilhaften Ausgestaltung der Erfindung ist es ferner möglich, die Regelung des durch die Vorrichtung hindurch tretenden Massendurchflusses zu automatiseren. Hierzu ist ferner eine Regeleinrichtung, beispielsweise in Form eines Regelschaltkreises, vorgesehen, die zum einen mit dem Sensor zum Empfangen des Sensorsignals und zum anderen mit dem Steuerventil, vorzugsweise mit dem elektrisch betriebenen Steuerventil, zum Steuern der erforderlichen Steuerventilöffnung und damit des gewünschten Massendurchflusses bzw. Sollmassendurchflusses verbunden ist.

Die Vorrichtung zum Messen eines Fluidmassendurchflusses ist vorzugsweise zur Verwendung für Gase ausgelegt, sie läßt sich jedoch bei einer entsprechenden Anpassung des Sensors auch zum Messen und Regeln eines Massendurchflusses von Flüssigkeiten verwenden.

Weitere Einzelheiten, Merkmale und Vorteile der Erfindung ergeben sich aus der nachfolgenden Beschreibung bevorzugter Ausführungsformen anhand der Zeichnung.

Es zeigen:
Figur 1 ein Blockschaltbild einer Vorrichtung zum Messen eines Gasmassendurchflusses gemäß der vorliegenden Erfindung;
Figuren 2a und 2b eine schematische Seitenschnittansicht einer realen Anordnung der Vorrichtung zum Messen eines Gasmassendurchflusses gemäß der vorliegenden Erfindung;
Figur 3 eine schematische Seitenschnittansicht einer ersten bevorzugten Ausführungsform eines erfindungsgemäßen Bypasses;
Figur 4 eine schematische Vorderansicht einer Preßplatte zur Verwendung in einem erfindungsgemäßen Bypaß;
Figuren 5a und 5b eine schematische Seitenansicht eines zwischen der Preßplatte und einer Bypaßgehäusewand angeordneten Einstellmediums gemäß der ersten Ausführungsform der vorliegenden Erfindung;
Figur 6 eine schematische Seitenschnittansicht einer zweiten bevorzugten Ausführungsform eines erfindungsgemäßen Bypasses; und
Figur 7 eine schematische Seitenschnittansicht einer dritten bevorzugten Ausführungsform eines erfindungsgemäßen Bypasses.

### Vorrichtung zum Messen und Regeln eines Gasmassendurchflusses

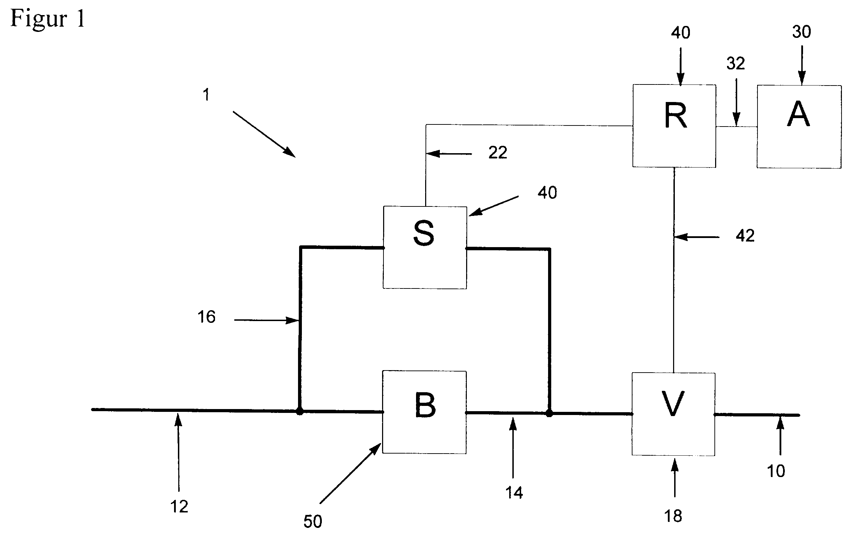

Figur 1 zeigt ein Blockschaltbild einer Vorrichtung zum Messen eines Massendurchflusses gemäß der vorliegenden Erfindung. Diese Vorrichtung wird vorzugsweise zum Messen und Regeln eines Gasmassendurchflusses verwendet, sie kann jedoch auch bei entsprechender Anpassung, vor allem des Sensors, zum Messen und Regeln eines Flüssigkeitsmassendurchflusses eingesetzt werden. Hier, wie in den folgenden Figuren, werden gleiche Teile mit gleichen Bezugszeichen bezeichnet.

Vorab sei bemerkt, daß in Figur 1 die dicken durchgezogenen Linien 10,12,14,16 zwischen den jeweiligen Einrichtungen Gasleitungen bzw. Gaskanäle darstellen, wohingegen die dünnen durchgezogenen Verbindungslinien 22,32,42 elektrische Verbindungen kennzeichnen. Von rechts nach links betrachtet, weist die Vorrichtung 1 zum Messen und Regeln eines Gasmassendurchflusses eine Gaseingangsleitung 10 auf, die ein in diesem Fall elektrisches Regelventil 18 umfaßt. Diese Gaseingangsleitung 10 geht an einem ersten Verzweigungspunkt über in eine Bypaßleitung 14 und eine Sensorleitung 16, wobei diese Leitungen 14 und 16 an einem zweiten Verzweigungspunkt wieder zusammenlaufen und in eine Gasausgangsleitung 12 münden. In der Bypaßleitung 16 ist ein Bypaß 50, der unten näher erläutert werden wird, mit der Funktion einer variierbaren Drosseleinrichtung angeordnet. Die Sensorleitung 16 beinhaltet einen Sensor 20, der über die elektrische Leitung 22 ein zu dem durch die Sensorleitung 16 strömenden Gasmassendurchfluß proportionales Sensorsignal an eine Regeleinrichtung 40 ausgibt. Die Regeleinrichtung 40, die eine intelligente Elektronik mit einer intelligenten elektrischen Schaltung aufweist, verarbeitet das Sensorsignal und gibt es über eine Leitung 32 an eine Anzeigeeinrichtung 30 aus bzw. stellt es zur Weiterverarbeitung bereit.

Der Vorrichtung 1 liegt das allgemeine Funktionsprinzip zugrunde, daß aus einem durch das Bypaßsystem 14,50 zu messenden und regelnden Hauptstrom bzw. Gasmassendurchfluß (erster Teilstrom durch die Bypaßleitung) ein zu diesem proportionaler exakt definierter Teilstrom (zweiter Teilstrom durch die Sensorleitung) über die Sensorleitung 16 mit dem Sensor 20 geleitet wird. Das von dem Sensor 20, der unten näher erläutert werden wird, ausgegebene Signal wird in der Regeleinrichtung 40 mit einem entsprechenden vorher festgelegten Sollwert verglichen, wobei die Regeleinrichtung in dem Fall, in dem keine Übereinstimmung mit dem Sollwert vorliegt, das Steuerventil 18, das hier elektrisch betrieben ist, derart ansteuert, um den Gasmassendurchfluß durch die Gaseingansgleitung entsprechend zur Differenz zwischen dem aktuellen Sensorsignal und dem Sollwert zu vergrößern bzw. zu verkleinern.

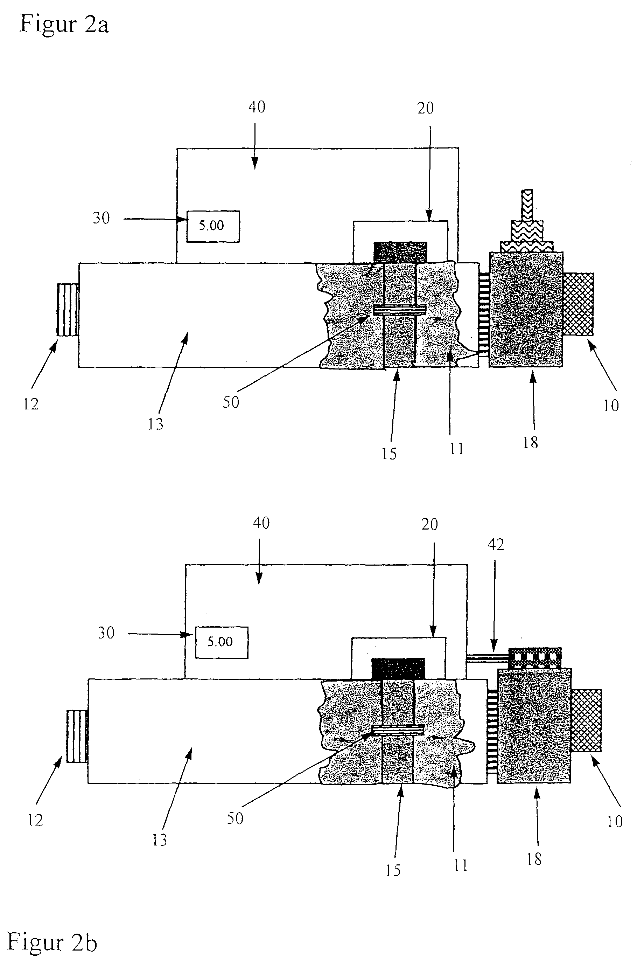

Es sei ferner auf die Figuren 2a und 2b verwiesen, in denen eine reale Anordnung der Vorrichtung 1 zum Messen und Regeln bzw. deren Komponenten dargestellt ist. Hierbei strömt Gas über eine Gaseingangsleitung 10 und ein Steuerventil 18 in einen ersten Gasraum 11, der durch eine Trennwand bzw. Trenneinrichtung 15 von einem zweiten Gasraum 13, der in eine Gasausgangsleitung 12 mündet, getrennt ist. Eine Verbindung zwischen dem ersten 11 und zweiten 13 Gasraum besteht somit zum einen durch einen in einem Bypaßkanal angeordneten Bypaß 50 und zum anderen durch einen nicht dargestellten Sensorkanal mit Sensor 20. In dieser Anordnung sind sowohl der Sensor 20, sowie eine Anzeigeeinrichtung 30 im Gehäuse der Regeleinrichtung 40 integriert. Die Regelung des Gasmassendurchflusses durch die Vorrichtung 1 kann gemäß Figur 2a unter Berücksichtigung der Anzeige der Anzeigeeinrichtung 30 manuell mittels Betätigen des Handventils 18 erfolgen. Es ist jedoch auch eine automatisierte Regelung möglich, indem die Regeleinrichtung 40 das von dem Sensor 20 ausgegebene Signal verarbeitet und das elektrisch betriebene Steuerventil 18 zur Einstellung des durch die Vorrichtung 1 strömenden Gasmassendurchflusses auf einen vorbestimmten Sollwert betätigt, wie es in Figur 2b gezeigt ist.

### Sensor und Elektronik

Ein in der Vorrichtung 1 beispielsweise zu verwendendes Funktionsprinzip des Sensors 16, 20 läßt sich wie folgt erklären. Der Temperaturanstieg in einem Gas ist eine Funktion der zugeführten Wärmemenge, des Massendurchflusses und der physikalischen Eigenschaften des Gases. Der Sensor 16,20 besteht hierbei im wesentlichen aus der Sensorleitung 16 in der Form eines Kapillarröhrchens 16, um welches zwei beheizte Widerstandsthermometer gewickelt sind. Jedes der Thermometer ist Bestandteil einer Meßbrücke. Der durch den Strömungsleiter im Hauptfluß abgelenkte, proportionale Gasfluß transportiert Wärme in Flußrichtung und bewirkt damit einen Temperaturunterschied zwischen den beiden Thermometern. Die hieraus resultierende Verstimmung der Meßbrücke (Wheatstone) ist das Maß für den Massenfluß.

Da das Sensorsignal sich lediglich im mV-Bereich bewegt und auch nicht linear ist, muß es entsprechend aufbereitet werden. Dies geschieht mit Hilfe der Elektronik in der Regeleinrichtung 40. Die in der Brückenschaltung integrierte Temperaturkompensation gleicht betriebsbedingte Schwankungen der Gas- und Umgebunstemperaturen weitgehend aus. Die Ansteuerung des Steuerventils 18 wird über einen Differenzverstärker vorgenommen, der den vorgegebene Sollwert mit dem jeweils anstehenden Istwert vergleicht.

### Bypaß

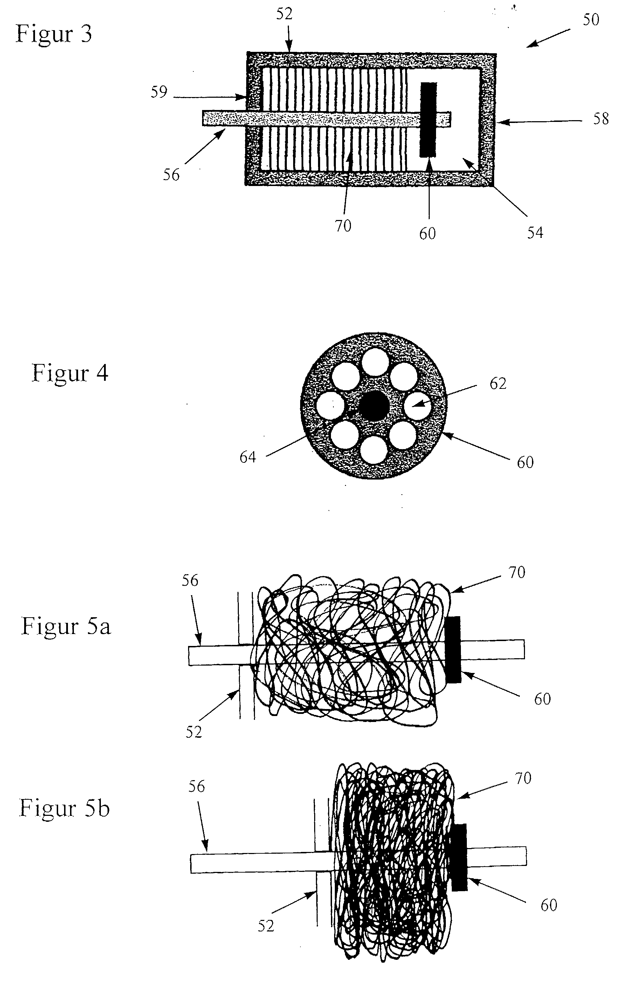

In den folgenden Figuren 3 bis 7 werden bevorzugte Ausführungsformen des in der oben dargestellten Vorrichtung 1 zum Messen und Regeln eines Gasmassendurchflusses verwendeten erfindungsgemäßen Bypasses erläutert. Auch hier gilt wieder, daß in jeweiligen Figuren, gleiche Teile mit gleichen Bezugszeichen bezeichnet werden.

### Erste Ausführungsform

Es sei zuerst auf Figur 3 verwiesen, in der eine schematische Seitenschnittansicht einer ersten bevorzugten Ausführungsform eines erfindungsgemäßen Bypasses dargestellt ist. Ein Bypaß 50, der die Funktion einer einstellbaren Drosseleinrichtung hat, was ein wichtiger Aspekt bei der unten beschriebenen Eichung der Vorrichtung 1 ist, weist ein Gehäuse 50 auf, das einen Einstellraum 54 umgibt. Der Bypaß ist dabei derart dargestellt, daß Gas von rechts an einer Gaseintrittsseite 58 durch einen Gaseingang 58 in den Einstellraum 54 strömt, und an einer Gasaustrittsseite 59 durch einen Gasausgang 59 wieder austritt. Zu diesem Zweck sind an der Gaseintrittsseite 58, die bei einem beispielsweise zylindrischen Gehäuse 52 die erste rechte Grundfläche 58 darstellt, und an der Gasaustrittsseite 59, die bei einem beispielsweise zylindrischen Gehäuse 52 die entsprechende zweite linke Grundfläche 59 darstellt, Durchgangslöcher vorgesehen, die in der Abbildung nicht dargestellt sind. In dem Einstellraum 54 ist ein Einstellmedium 70 in Form von Edelstahlwolle untergebracht, die zwischen der austrittsseitigen Bypaßgehäusewand 59 und einer Preßplatte 60 angeordnet ist. Diese Preßplatte 60 kann mittels einer von links in den Einstellraum sich erstreckenden Stange 56, die einen Teil einer Einstelleinrichtung darstellt, in axialer Richtung der Stange, d.h. gemäß Figur 3 nach links und rechts verschoben werden. Hierzu sei auf die Figuren 5a und 5b verwiesen, in denen ein derartiges Verschieben der Stange 56 bzw. der Preßplatte 60 anhand einer Seitenansicht dargestellt ist. Ein Verschieben der Stange 56 kann zum einen manuell geschehen, wobei es dann vorteilhaft ist, die Einstelleinrichtung mit einer nicht dargestellten Arretiereinrichtung zu versehen, um die Position der Stange 56 zu fixieren. Es ist aber auch möglich die Stange 56 mit einer nicht dargestellten elektrisch betriebenen Einrichtung, wie beispielsweise einem Elektromotor, zu bewegen.

In Figur 5a befindet sich die Stange 56 bzw. die Preßplatte 60 in einer Ausgangsstellung, in der die Edelstahlwolle 70 sich in einem quasi "entspannten" bzw. nicht mit Druck beaufschlagten Zustand befindet. Ein in den Bypaß einströmendes Gas kann hierbei relativ ungehindert durch die locker angeordneten Edelstahlfasern 70 bzw. Maschen 70 strömen, was in einem geringen Strömungswiderstand des Bypasses 50 resultiert. Wird hingegen die Stange 56 mit der Preßplatte 60 nach links verschoben, so wird die Edelstahlwolle 70 zwischen der Bypaßgehäusewand 52 und der Preßplatte 60 zusammengedrückt. Aufgrund der nun dichten Anordnung der Edelstahlfasern 70 ist es für das Gas nun schwer, durch die Faserzwischenräume zu strömen, was in einem großen Strömungswiderstand des Bypasses 50 resultiert. Durch eine entsprechende Stangenposition bzw. Preßplattenposition relativ zum Bypaßgehäuse 52 kann somit der Strömungswiderstand variiert werden. Trotz des quasi elastischen Verhaltens der Edelstahlwolle 70 ist es vorteilhaft diese an der Preßplatte 60 zu befestigen, um beim Verschieben der Stange 56 nach rechts wieder einen "entspannten" Zustand der Edelstahlwolle 70 mit großen Gaszwischenräumen zu erreichen.

Figur 4 ist eine Vorderansicht einer kreisförmigen Preßplatte 60, die vorteilhafterweise in einem zylinderförmigen Bypaßgehäuse 52 verwendet wird. In der Mitte der Preßplatte 60 ist dabei eine Zentralausnehmung 64 zur Befestigung mit der Stange 56 vorgesehen, wobei um diese Ausnehmung 64 herum Durchgangslöcher 62 zum Durchlassen von Gas angeordnet sind.

### Zweite Ausführungsform

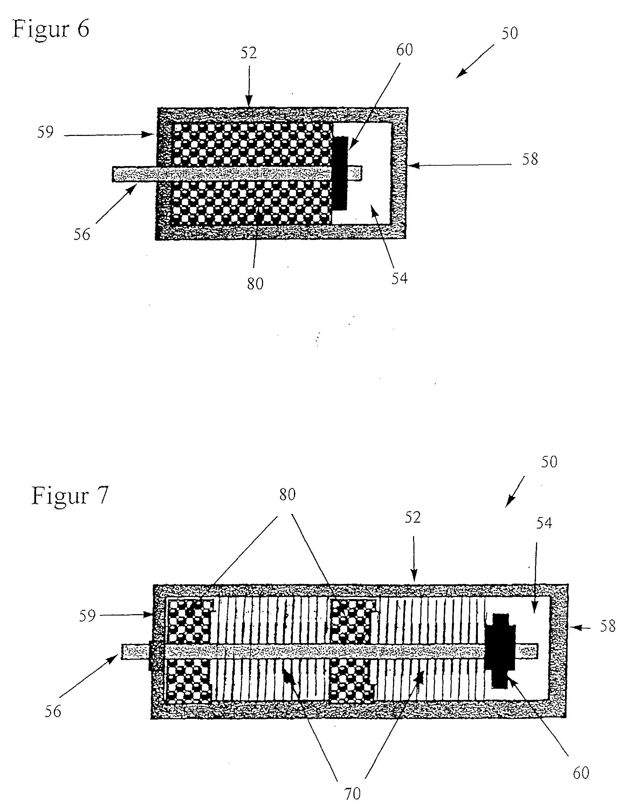

Es sei nun auf Figur 6 verwiesen, in der eine schematische Seitenschnittansicht einer zweiten bevorzugten Ausführungsform eines erfindungsgemäßen Bypasses dargestellt ist. Als Unterschied zur ersten Ausführungsform wird hier das Einstellmedium 80 von unabhängig voneinander beweglichen kleinen Körpern 80, in diesem Fall Kügelchen, gebildet. Der Durchmesser dieser Kügelchen ist dabei vorteilhafterweise klein (im Bereich von 0,5 bis 2 mm) relativ zu der Abmessung des Einstellraums (zylindrisch mit einer Länge im Bereich von 10 bis 150 mm und einem Durchmesser von 5 bis 100 mm), so daß sowohl in horizontaler, als auch in vertikaler Richtung eine Vielzahl von Kugelebenen bzw. Kugelschichten angeordnet werden können. Die Kügelchen können dabei aus Metall, wie beispielsweise Edelstahl, oder auch aus Kunststoff ausgebildet sein und alle den gleichen Durchmesser aufweisen. Es ist jedoch auch denkbar, Kügelchen mit unterschiedlichen Durchmessern zu verwenden. In Figur 6 ist ein Zustand gezeigt, bei dem die Kügelchen 80 durch Aneinanderpressen mittels der Preßplatte 60 und der Gehäusewand 52 eine dichte Kugelpackung einnehmen, wodurch ein maximal erreichbarer Strömungswiderstand eingestellt ist. Durch Wegnahme des Anpreßdrucks, d.h. durch Verschieben der Stange 56 bzw. der Preßplatte 60 nach rechts können sich die Kügelchen aufgrund der Schwerkraft wieder auseinander bewegen bzw. nach unten fallen, was insbesondere in den oberen Ebenen den Strömungswiderstand verringert.

Werden elastisch deformierbare Kügelchen aus Kunststoff verwendet, so können diese bei einem nach links Bewegen der Stange 56 bzw. der Preßplatte 60 nicht nur aneinander gepreßt, sondern auch zusammen gepreßt werden, so daß eine zusätzliche Erhöhung des Strömungswiderstands durch Verkleinerung der Kugelzwischenräume und somit ein weiterer "Freiheitsgrad" bezüglich der Variierbarkeit des Strömungswiderstands des Bypasses erreicht wird.

### Dritte Ausführungsform

Es sei auf Figur 7 verwiesen, in der eine schematische Seitenschnittansicht einer dritten bevorzugten Ausführungsform eines erfindungsgemäßen Bypasses dargestellt ist. Als Unterschied zur ersten und zweiten Ausführungsform wird hier das Einstellmedium 70,80 in Form einer zusammengesetzten Struktur entlang der Stange 56 angeordneter Abschnitte verwendet, wobei von links nach rechts gesehen, sich die Abfolge der Abschnitte wie folgt darstellt: Vielzahl von unabhängig voneinander bewegbaren Kügelchen 80, Edelstahlwolle 70, Kügelchen 80, Edelstahlwolle 70.

Allen drei Ausführungsformen ist die Eigenschaft gemeinsam, daß sie für das durch den Bypaß 50 strömende Gas einen langen zu durchströmenden Weg bereitstellen (durch viele Maschen bei dem fasrigen Stoff bzw. viele kleine, vorteilhafterweise gerundete Körper), durch den eine im wesentlichen laminare Strömung im Bypaß 50 gewährleistet wird. Diese Eigenschaft ist für eine Messung eines Gasmassendurchflusses mit hoher Präzision erforderlich. Besonders in der dritten Ausführungsform werden lange zu durchströmenden Wege durch das Vorsehen aneinander gepreßter Kugelpackungen 80 entweder durch Beaufschlagen mit Druck durch die Preßplatte 60 oder durch die quasi elastische Druckwirkung der Edelstahlwolleabschnitte 70 bei jeder der Stangenposition bzw. Preßplattenposition erreicht. Entsprechende Vorteile ergeben sich auch bei den folgenden drei Ausführungsformen.

### Vierten Ausführungsform

Gemäß einer vierten Ausführungsform des erfindungsgemäßen Bypasses ist nur ein fasriger Stoff, wie Edelstahlwolle, im Bypaß angeordnet, ohne eine Einstelleinrichtung bzw. ein Verstellglied vorzusehen. Der Strömungswiderstand des Bypasses kann wie in der ersten Ausführungsform in Abhängigkeit von der Art (Faserstärke usw.) und der Menge der Edelstahlwolle eingestellt werden. Um beispielsweise bei einer geringen Beschickung von Edelstahlwolle im Bypaß eine Bewegung von dieser zu verhindern, wird vorteilhafter eine Fixiereinrichtung vorgesehen, die wie in Figur 3 von einer Stange 56 mit einer Preßplatte 60 gebildet werden kann. Allgemein gesagt, kann die Einstelleinrichtung der ersten drei Ausführungsformen bzw. deren Verstellglied als Fixiereinrichtung verwendet werden, wenn das Verstellglied festgehalten wird.

### Fünfte Ausführungsform

Gemäß einer fünften Ausführungsform des erfindungsgemäßen Bypasses sind wie in der dritten Ausführungsform die gerundeten Körper bzw. Kügelchen 80 im Einstellraum 54 angeordnet, wie es beispielsweise in Figur 6 gezeigt ist, wobei hier vorteilhafterweise die Stange 56 bzw. Preßplatte 60 als Fixiereinrichtung dient, wenn die Körper bzw. Küglchen 80 den Einstellraum 54 nicht ganz ausfüllen. Anstelle der Stange 56 kann eine Fixierung mittels eines Magneten erfolgen, sofern die Körper 80 ferromagnetische Anteile aufweisen. Der Strömungswiderstand des Bypasses kann hier wie in der zweiten Ausführungsform in Abhängigkeit der Abmessung der Körper bzw. Kügelchen 80 und deren Menge bzw. Anzahl eingestellt werden. Vorteilhafterweise lassen sich die Körper bzw. Kügelchen 80 dabei durch in dem Bypaßgehäuse 52 dafür vorgesehene, in der Figur nicht dargestellte, Löcher einfüllen, durch die Fixiereinrichtung aneinander pressen bzw. fixieren, oder bei Nichtbedarf durch die Löcher entnehmen. Somit lassen sich mit einem Bypaß durch Verändern eines Parameters, wie dem Füllgrad, mehrere verschiedene Strömungswiderstände einstellen.

### Sechste Ausführungsform

Es sei wieder auf Figur 7 verwiesen, anhand der eine sechste bevorzugte Ausführungsform eines erfindungsgemäßen Bypasses dargestellt ist, die eine Kombination der vierten und fünften Ausführungsform darstellt. Hierbei wird das Einstellmedium 70,80 in Form einer Kombination bzw. zusammengesetzten Struktur entlang der Stange 56 angeordneter Abschnitte verwendet, wobei von links nach rechts gesehen, sich die Abfolge der Abschnitte wie folgt darstellt: Vielzahl von unabhängig voneinander bewegbaren Kügelchen 80, Edelstahlwolle 70, Kügelchen 80, Edelstahlwolle 70. Die Stange 56 und die Preßplatte 60 dienen als Fixiereinrichtung zum Festmachen des Einstellmediums. Durch die Fixiereinrichtung wird allgemein eine Bewegung des Einstellmediums verhindert und eine Laminarität hohen Grades des durch den Bypaß strömenden Fluids bzw. Gases erreicht.

### Verfahren zum Eichen der Vorrichtung

Im folgenden soll ein zum Eichen der Vorrichtung 1 zum Messen und Regeln eines Gasmassendurchflusses verwendbares Verfahren erläutert werden, was notwendig ist, da der Sensor 20 nur in einem bestimmten Durchflußbereich optimal arbeitet bzw. nur für einen bestimmten Durchflußbereich ausgelegt ist.

Zuerst wird hierbei ein Strom bzw. Durchfluß Iₛ als Sollwert festgelegt, auf den die Vorrichtung 1 hinregeln soll. Dann wird ein definierter Strom I₁, der kleiner als Iₛ ist, in den Gaseingangskanal 10 (siehe beispielsweise Figur 1) eingeleitet. Daraufhin wird der Strömungswiderstand durch den Bypaß mittels Bewegen der Stange 56 (siehe beispielsweise Figur 3) so lange verändert, bis die Anzeige der Anzeigeeinrichtung 30 in einem unteren Bereich liegt, beispielsweise den Wert 1 in einem Bereich von 1 bis 10 annimmt. Durch Einleiten eines zweiten definierten Stroms I₂, der größer als Iₛ ist, soll nun ein zweiter Anzeigewert in einem oberen Bereich, beispielsweise als Wert 9, festgelegt werden. Nach Festlegen bzw. Zuordnen zweier definierter Stromwerte bzw. Durchflußwerte zu zwei Anzeigewerten, können somit unter Annahme eines linearen Verhaltens zwischen Durchfluß- und Anzeigewerten beliebige eingeleitete Durchflußmengen im Bereich von I₁ bis I₂ interpoliert und somit gemessen werden. Bei höheren bzw. komplizierten Abhängigkeiten zwischen Durchfluß- und Anzeigewerten sind entsprechend mehr Eichpunkte als bei I₁ und I₂ notwendig.

Offenbart ist eine Vorrichtung zum Messen eines Fluidmassendurchflusses, insbesondere Gasmassendurchflusses, mit einem Fluideingangskanal; einem Fluidausgangskanal; einem Sensorkanal mit einem Sensor zum Erfassen des Fluidmassendurchflusses eines ersten Fluidteilstroms, wobei der Sensorkanal zwischen dem Fluideingangskanal und dem Fluidausgangskanal angeordnet ist; und einem Bypaßkanal mit einem Bypaß 50 zum Einstellen der Größe eines zweiten Teilstroms, wobei der Bypaßkanal parallel zum Sensorkanal zwischen dem Fluideingangskanal und dem Fluidausgangskanal angeordnet ist. Der Bypaß 50 umfaßt dabei einen Fluideingang 58, einen Fluidausgang 59, einen Fluideinstellraum 54, der zwischen dem Fluideingang 58 und dem Fluidausgang 59 ausgebildet ist, ein eine laminare Strömung bereitstellendes Einstellmedium 70, das in dem Fluideinstellraum 54 angeordnet ist, wobei das Einstellmedium 70,80 eine Agglomeration einer Vielzahl einzelner Elemente ist, durch deren Zwischenräume das Fluid strömt. Derartige Bypässe erlauben aufgrund der Bereitstellung einer laminaren Strömung durch das Einstellmedium eine hoch präzise Bestimmung des Fluidmassendurchflusses.

### Bezugszeichenliste

- 1: Vorrichtung zum Messen und Regeln
- 10: Gaseingangsleitung
- 11: 1. Gasraum
- 12: Gasausgangsleitung
- 13: 2. Gasraum
- 14: Bypaßkanal, Bypaßleitung
- 15: Trenneinrichtung
- 16: Sensorkanal, Sensorleitung
- 18: Steuerventil
- 20: Sensor
- 22: elektrische Signalleitung vom Sensor
- 30: Anzeigeeinrichtung
- 32: elektrische Verbindungsleitung zu 30
- 40: Regeleinrichtung mit Elektronik
- 42: elektrische Verbindungsleitung zu 18
- 50: Bypaß
- 52: Bypaßgehäuse
- 54: Einstellraum
- 56: Stange, Einstelleinrichtung
- 58: Gaseintrittsseite
- 59: Gasaustrittsseite
- 60: Preßplatte
- 62: Durchgangslächer in 60
- 64: Zentralausnehmung für 56
- 70: Einstellmedium: Edelstahlwolle
- 80: Einstellmedium: gerundete Kügelchen

## Patentansprüche

1. Bypaß für eine Vorrichtung zum Messen eines Fluidmassendurchflusses, wobei der Bypaß aufweist,
einen Fluideingang (58),
einen Fluidausgang (59),
einen Fluideinstellraum (54), der zwischen dem Fluideingang (58) und dem Fluidausgang (59) ausgebildet ist,
ein eine laminare Strömung bereitstellendes Einstellmedium (70,80), das in dem Fluideinstellraum (54) angeordnet ist, **dadurch gekennzeichnet**,
daß das Einstellmedium (70,80) eine Agglomeration einer Vielzahl einzelner Elemente ist, wobei das Fluid durch Zwischenräume von benachbarten Elementen strömt.

2. Bypaß nach Anspruch 1, dadurch gekennzeichnet, daß das Einstellmedium (70) einen fasrigen Stoff, insbesondere Stahlwolle (70) aufweist.

3. Bypaß nach einem der Ansprüche 1 bis 2, dadurch gekennzeichnet, daß das Einstellmedium (80) gerundete geometrische Körper, insbesondere Kügelchen (80) aufweist, deren Abmessungen klein relativ zu der Abmessung des Einstellraums (54) ist.

4. Bypaß nach einem der Ansprüche 1 bis 3, gekennzeichnet durch eine Fixiereinrichtung (56,60) zur Fixierung des Einstellmediums (70,80) in dem Einstellraum (54).

5. Bypaß nach einem der Ansprüche 1 bis 3, dadurch gekennzeichnet, daß der Strömungswiderstand für ein durch den Bypaß strömendes Fluid durch Veränderung der geometrischen Form des Einstellmediums (70,80) einstellbar ist.

6. Bypaß nach Anspruch 5, gekennzeichnet durch eine Einstelleinrichtung (56,60) zur Veränderung der geometrischen Form des Einstellmediums (70,80).

7. Bypaß nach Anspruch 6, dadurch gekennzeichnet, daß die Einstelleinrichtung (56,60) ein von der Außenseite des Bypasses in den Einstellraum (54) sich erstreckendes Verstellglied (56) aufweist.

8. Bypaß nach Anspruch 7, dadurch gekennzeichnet, daß die Einstelleinrichtung (56,60) eine Stange (56) aufweist, die sich eintretend an einer der Seiten des Fluideingangs (58) oder Fluidausgangs (59) in Richtung der anderen der Seiten des Fluideingangs (58) oder Fluidausgangs (59) erstreckt und in Richtung seiner Achse bewegbar ist.

9. Bypaß nach Anspruch 8, dadurch gekennzeichnet, daß der in dem Einstellraum (54) angeordnete Abschnitt der Stange (56) an seinem Endabschnitt eine Preßplatte (60) aufweist, die derart angeordnet ist, daß sie sich radial von der Stangenachse weg erstreckt.

10. Bypaß nach Anspruch 9, dadurch gekennzeichnet, daß das Einstellmedium (54) zwischen der Seite des Fluideingangs (58) oder Fluidausgangs (59), an der die Stange (56) eintritt, und der Preßplatte (60) angeordnet ist.

11. Vorrichtung zum Messen eines Fluidmassendurchflusses, insbesondere Gasmassendurchflusses, mit:
einem Fluideingangskanal (10);
einem Fluidausgangskanal (12);
einem Sensorkanal (16) mit einem Sensor (20) zum Erfassen des Fluidmassendurchflusses eines ersten Fluidteilstroms, wobei der Sensorkanal (16) zwischen dem Fluideingangskanal (10) und dem Fluidausgangskanal (12) angeordnet ist;
einem Bypaßkanal (14) mit einem Bypaß (50) zum Einstellen der Größe eines zweiten Fluidteilstroms, wobei der Bypaßkanal parallel zum Sensorkanal (16) zwischen dem Fluideingangskanal (10) und dem Fluidausgangskanal (12) angeordnet ist, **dadurch gekennzeichnet**,
daß der Bypaßkanal (14) einen Bypaß (50) gemäß der Ansprüche 1 bis 10 aufweist.

12. Vorrichtung zum Messen eines Fluidmassendurchflusses nach Anspruch 11, gekennzeichnet durch ein Steuerventil (18) zum Einstellen des Fluidmassendurchflusses durch die Vorrichtung (1).

13. Vorrichtung zum Messen eines Fluidmassendurchflusses nach Anspruch 12, gekennzeichnet durch eine Regeleinrichtung (40), die das Steuerventil (18) auf der Grundlage eines von dem Sensor (20) ausgegebenen Sensorsignals steuert.
